# EUROPEAN PATENT APPLICATION

(11) **EP 4 597 880 A1**
(43) Date of publication of application: **06.08.2025**
(21) Application number: 24212430.3
(22) Date of filing: 12.11.2024
(51) Int. Cl.: H04B 10/112, H04B 10/118

(54) **ASSEMBLY FOR SPATIAL OPTICAL COMMUNICATION**

(30) Priority: 05.02.2024 LU 506308
(71) Applicant: Odysseus Space S.A., 4362 Esch-sur-Alzette (LU)
(72) Inventor: Agnan, Marco, L-4140 Esch-sur-Alzette (LU); Monechi, Guido, L-4375 Sanem (LU); Donnot, Aubin, L-4361 Esch-sur-Alzette (LU)
(74) Representative: Office Freylinger

(57) **Abstract**

The invention relates to an assembly for optical communication, in particular space communication, through a telescope, the assembly comprising an image sensor (24) with an array of pixels, an optical emitter (26) configured to emit an emitted light (27) to transfer information, a beam splitter (20) and a beam director (18); wherein the beam director (18) is arranged to receive incoming light (13) from a target (12) transmitted through the telescope, and reflect said incoming light (13) towards the beam splitter (20); wherein the beam splitter (20) is arranged to reflect or transmit incoming light (13) reflected by the beam director (18) towards the image sensor (24), such that the image sensor (24) at least partially receives the incoming light (13); wherein the beam splitter is arranged to split the emitted light into a calibration branch (27.2) and an outgoing branch (27.1), such that light of the calibration branch (27.2) is received by the image sensor (24), and light of the outgoing branch (27.1) is reflected by the beam director (18) towards the telescope; wherein, in use, data from the image sensor (24) is processed by a control unit (15) and used to control the beam director (18) to track the target (12) and cancel high-frequency noise. According to the invention, the assembly further comprises an optical attenuator (28) arranged on an optical path of the calibration branch (27.2) to reduce its intensity; wherein the image sensor (24) is operable in a calibration mode or in a link mode by modifying an integration time parameter of the image sensor (24); wherein the image sensor (24) and the optical attenuator (28) are configured such that the calibration branch of the emitted light has a power which is higher than a minimum power for registration for the image sensor (24) when the latter is in calibration mode; and wherein the image sensor (24) and the optical attenuator (28) are configured such that the calibration branch of the emitted light has a power which is lower than a minimum power for registration for the image sensor (24) when the latter is in link mode.

## Description

### Technical field

The present invention relates to the field of satellite communication and, more specifically, to a Free Space Assembly (FSA) designed to establish and maintain optical communication links between satellites and ground stations.

### Background Art

Satellite optical communication has emerged as a pivotal technology for the rapid and reliable exchange of data between satellites and ground stations. Indeed, optical communication can be modulated at a much higher frequency than conventional carriers such as radio waves, thereby drastically increasing data transfer rates. Systems for optical communication may also be smaller, lighter and may require a lower power than those for conventional carriers. However, a technical challenge for optical communication systems is the inherent difficulty of precisely tracking and maintaining a connection with a target ground station.

Indeed, contrarily to radio waves which spread widely as they propagate through space, optical communication have a considerably narrower spread and thus requires to accurately steer a focused beam towards the target ground station to establish a communication link. This link must then be maintained and kept stable during the entirety of the data transfer to prevent power fluctuations and packet loss. However, environmental factors, atmospheric turbulence, and the dynamic motions of the satellite can generate mechanical noise and other perturbations which contributes to the complexity of maintaining a stable optical link.

Tracking systems encounter limitations in their ability to adapt to dynamic environmental conditions and variations in satellite motion. This result in communication disruptions, reduced data transfer rates, and compromised overall system performance. There thus exists a need for an innovative solution that can reliably and track target ground stations, thereby ensuring robust satellite optical communication under diverse operational scenarios.

### Technical problem

It is an object of the present invention to provide an assembly for optical communication, designed to establish and maintain reliable optical communication links between satellites and ground stations.

### General Description of the Invention

This object is achieved by an assembly as claimed in claim 1.

The present invention proposes an assembly for optical communication, the assembly comprises an image sensor with an array of pixels, an optical emitter configured to emit an emitted light to transfer information, a beam splitter and a beam director. The beam director is an optical component configured for dynamically redirecting light, either by reflection or by refraction, preferably with a short response time. The beam director may be e.g. a fast-steering mirror. As is known in the art, a fast-steering mirror is a mirror that is mounted on actuators, e.g. piezoelectric actuators/stage, to enable rapid and precise adjustments of their orientation. Fast-steering mirrors are typically able to operate with high-speed response and accuracy, and can thus be used to cancel high-frequency noise. Alternatively, the beam director may be a refractive lens (assembly) mounted on a piezoelectric stage.

Incoming light from a target and transmitted through a telescope, is redirected by the beam director, is subsequently reflected by or transmitted through the beam splitter, and is at least partially received by the image sensor. The emitted light is split by the beam splitter into a calibration branch and an outgoing branch. The calibration branch of the emitted light is received by the image sensor, and the outgoing branch is redirected by the beam director towards the telescope. In use, a control unit is configured to receive and process data from the image sensor and to use said data to control the beam director to track the target and thereby cancel perturbations.

Hence both the calibration branch and the incoming light from the target (typically beacon light from a ground station) is received by the image sensor. Furthermore, the incoming light from the target and the outgoing branch share similar optical paths between the telescope and the beam splitter. As it will be clear below, by centering the incoming light from the target on a pointing target dependent on the calibration branch, it is possible to ensure that the optical path of light from the target to the assembly substantially coincides with the instantaneous orientation of the optical axis, i.e. the optical path of the emitted branch.

This assembly is particularly suited for spatial optical communication, whereby the assembly may typically be integrated in a laser communication terminal installed onboard a satellite, to transfers data to a target such as a ground station.

It remains to be noted that the present invention proposes an improved design that permits acquisition and tracking with a single steering mirror (the SEM) and a single image sensor.

In embodiments, the assembly further comprises an optical attenuator arranged on an optical path of the calibration branch. The optical attenuator is an optical device/filter configured to reduce the intensity of the light passing therethrough, such as e.g. a neutral density filter. In doing so, the power of the emit beam can be reduced to avoid 'blinding' the image sensor. The image sensor is configured such that it can be operated in a calibration mode or in a link mode by modifying an integration time parameter of the image sensor. The image sensor and the optical attenuator are configured such that the calibration branch of the emitted light has a power which is higher than a minimum power for registration for the image sensor when the latter is in calibration mode, and such that the calibration branch of the emitted light has a power which is lower than a minimum power for registration for the image sensor when the latter is in link mode.

Hence, the image sensor is able to detect the calibration branch whilst in the calibration mode, and is unable to detect it whilst in the link mode. This configuration prevents the emit light in the calibration branch from "blinding" the image sensor or introducing signal ambiguity during link.

In embodiments, the assembly further comprises reflective means configured to reflect the calibration branch back towards the beam splitter. The reflective means are configured to reflect back the incident light, i.e. at 180°. The reflective means may be a corner cube or any equivalent device. The optical attenuator is arranged between the beam splitter and the reflective means, such that the optical attenuator is neither on an optical path of the incoming light from the telescope nor on an optical path the outgoing branch.

This configuration enables to reduce the power of the calibration branch exclusively, i.e. without affecting the power of the outgoing branch or of the incoming light, thereby ensuring that the calibration branch remains undetectable by the image sensor during link.

In embodiments, the image sensor is configured such that it can be operated in an acquisition mode by modifying an integration time parameter of the image sensor. The image sensor and the optical attenuator are configured such that the calibration branch of the emitted light has a power which is lower than a minimum power for registration for the image sensor when the latter is in acquisition mode.

Hence, the image sensor is unable to detect the calibration branch whilst in the acquisition mode. This configuration prevents the image sensor from "blinding" the image sensor or introducing signal ambiguity during target acquisition.

In embodiments, the image sensor may be selectively operated in a first resolution state or in a second resolution state. The second resolution state has a lower resolution and a higher framerate than the first resolution state. In calibration mode, the image sensor is in its first resolution state, whereas in link mode, the image sensor is in its second resolution state.

Hence, in its link mode the image sensor is operated in a windowed state (corresponding to the second resolution state) to achieve high frame/sampling rates (e.g. of the order of a few kHz) and obtain phase information for the measured signal. This increases the disturbance rejection bandwidth of the FSM, which is typically an order of magnitude lower than the sampling rate of the image sensor, thereby enabling cancelation of high-frequency perturbations and improving the stability of the system.

In embodiments, the assembly further comprising a coarse pointing assembly. The coarse pointing assembly may be used during target acquisition or to partially offload tracking of the target from the beam director, as will be clear below.

The control unit is configured to perform the herein disclosed operating modes, functions and techniques., typically by means of software and/or hardware.

The Invention further provides a method for operating the present assembly for optical communication, comprising the steps of:
- measuring a position of a bright spot of the calibration branch on the image sensor, thereby obtaining a calibration correction;
- acquiring a beacon signal from a ground station;
- tracking the beacon signal.

Tracking of the beacon signal is achieved by operating the FSM to center the beacon signal on a pointing target, thereby cancelling perturbations and tracking the beacon signal from the target. Said pointing target is determined based on the calibration correction.

In embodiments, the pointing target is computed based on a pointing ahead correction and the calibration correction. The pointing ahead correction is conventionally defined as an adjustment of the orientation of the satellite to compensate for satellite's motion relative to its target during the time it takes for the signal to propagate between them, or adjustment of line of sight (instantaneous orientation of the optical axis/ target pointing direction), as is known in the art. The point pointing ahead correction may typically correspond to the angle between uplink and down-link beams (also referred to as point ahead angle). The FSM is thus operated to compensate for the calibration offset, the pointing ahead correction, and the perturbations.

In embodiments, operating the FSM to center the beacon signal on a pointing target is performed by ensuring that a measured pointing error is lower than a predetermined maximum pointing error. This predetermined maximum pointing error essentially corresponds to the error required for the closing of the link budget.

In embodiments, the step of calibration is performed when the image sensor is set to the calibration mode, and the step of tracking is performed when the image sensor is set to the link mode.

In embodiments, the step of calibrating the image sensor and/or the step of acquiring a beacon signal is performed when the image sensor is set to the first resolution state, and the step of tracking is performed when the image sensor is set to the second resolution state.

In embodiments, the step of acquiring a beacon signal from a ground station is performed by operating the CPA to point towards the ground station.

In embodiments, tracking of the beacon signal is further achieved by operating the CPA to cancel low-frequency vibrations, movement and/or orientation changes of the FSM, thereby partially offloading tracking from the FSM to the CPA. By passing the FSM state to the CPA and operating the latter to cancel low-frequency vibrations movement and/or orientation changes, it is possible to ensure that the FSM does not get saturated, i.e. does not reach its maximum movement range.

In embodiments, during the step of tracking (and preferably after the predetermined maximum pointing error is satisfied - i.e. after convergence), the emitted light from the optical emitter is modulated to transfer data to the ground station.

The invention further provides a satellite terminal comprising the assembly as described above, and further comprising an interface for coupling with a satellite. In embodiments, the interface comprises a passive dampening system, with at least one passive dampener.

A control unit may comprise instructions to execute the method for operating the assembly as defined above. The control unit may be part of the assembly, or may be external to the assembly. In the latter case, the assembly comprises the required port to connect the image sensor, the FSM and, if applicable, the CPA to the control unit.

### Brief Description of the Drawings

A preferred embodiment of the invention will now be described, by way of example, with reference to the accompanying drawings in which:
Fig. 1 is a schematic view of the assembly for optical communication according to an embodiment of the invention;
Fig. 2 is a timeline view of a method for operating the assembly of figure 1;
Fig. 3 is a representation of different screen-space positions relative to the image sensor of the assembly of figure 1;
Fig. 4 is a representation of the power detection thresholds of the optical detector at different phases of operation of the assembly of figure 1;
Fig. 5 is a block diagram view of a control loop for the assembly of figure 1.

### Description of Preferred Embodiments

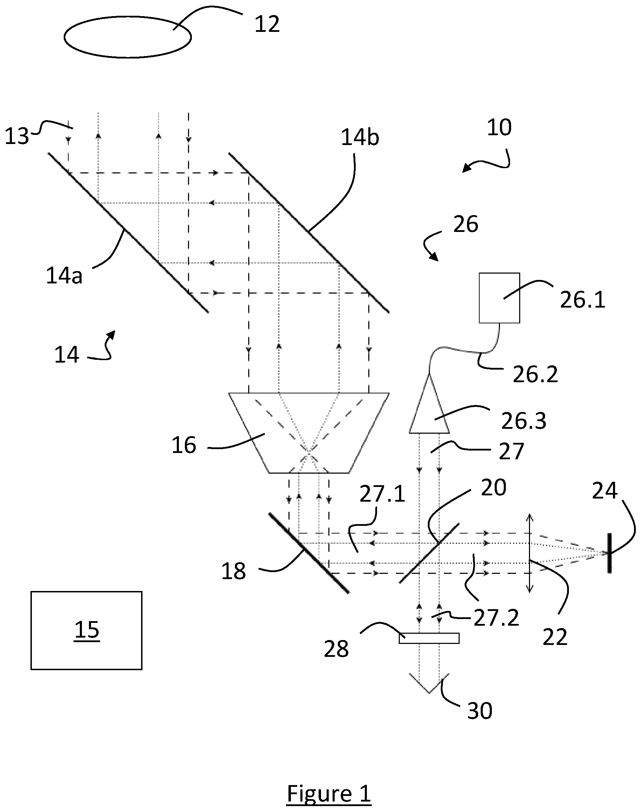

Figure 1 shows a schematic view of the assembly 10 for optical communication according to an embodiment of the invention. The assembly 10 is mounted on a satellite to communicate with a ground station.

The assembly 10 is typically part of an optical communication terminal, which is conventionally configured to perform the following main functions: acquire a remote beacon signal and orient the system line of sight; track the beacon signal in order to maintain the transmit signal target; deliver a collimated optical signal which is modulated by a transmit data stream; receive data from a remote terminal.

The focus of the present invention relates to acquisition and tracking and proposes an improved optical assembly design and related operating method.

Referring to fig.1, the present assembly comprises an image sensor 24, an optical emitter 26, a beam splitter 20, and a beam director 18, which is here a fast-steering mirror (FSM, also with reference sign 18). This assembly is conventionally combined with a telescope 16 and Coarse Pointing Assembly (CPA) 14.

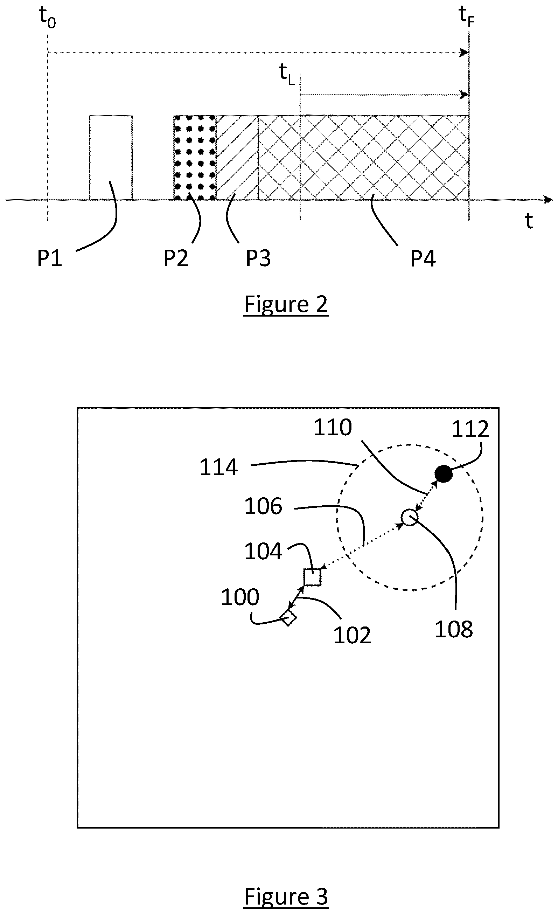

In use, the ground station 12 emits a beacon light 13, which enters the CPA 14 of the assembly 10. This CPA 14 comprises a motorized elevation mirror 14a and a motorized azimuth mirror 14b, both of which reflect the beacon light. The beacon light is subsequently focused by the telescope 16 and is reflected by the FSM 18 towards the beam splitter 20. The FSM 18 is mobile in order to steer/orientate light, and comprises mirror(s) and actuator(s), as is known in the art. The beacon light is transmitted through the beam splitter 20, and is focused by a focusing lens 22 before reaching a focal plane array (FPA) in which the image sensor 24 is arranged, and on which the beacon light forms a bright spot. The coordinate of this bright spot is registered by the image sensor 24, as shown on figure 3 by reference sign 112.

The image sensor 24 comprises an array of pixels (photosites) configured to translate light into digital signals to form an image. The image sensor 24 can be based on any appropriate technology, e.g. CCD, CMOS, or others.

In operation, the image sensor 24 can be operated in various modes, namely by varying its framerate and integration time, as discussed in more detail. The term 'register' means that light arriving onto the image sensor 24 is actually captured and converted into electrical signals that can be processed. Stated otherwise, when a light beam arriving onto the image sensor is said to be registered, it means that it is detected by the image sensor in its current operating mode; the light is "seen" by the image sensor 24 and forms a corresponding digital image.

The assembly 10 comprises the optical emitter 26, itself comprising a transmitter 26.1 with a laser source, an optical fiber 26.2, and a collimator 26.3. The optical emitter 26 emits a laser beam 27 towards the beam splitter 20, which splits the emitted laser beam into an outgoing branch 27.1 and a calibration branch 27.2. More specifically, the outgoing branch 27.1 is reflected by the beam splitter 20 and the FSM 18, and is subsequently widened by the telescope 16 before being reflected by the CPA mirrors 14a, 14b towards the ground station 12.

Meanwhile, the calibration branch 27.2 is transmitted through the beam splitter 20, and passes through a neutral density filter (NDS) 28 before reaching reflective means, here a corner cube 30. The corner cube 30 reflects the calibration branch back (at 180°) through the filter 28 towards the beam splitter 20. The NDS 28 is advantageously located between the beam splitter 20 and the corner cube 30 to reduce the power of the calibration branch without reducing the power of the beacon light or the outgoing branch.

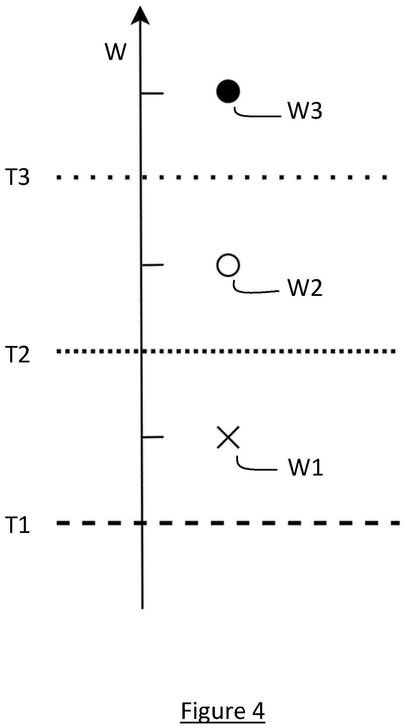

Finally, the calibration branch is reflected by the beam splitter 20 towards the focusing lens 22 and the image sensor 24. Upon reaching the image sensor 24, the calibration branch forms a bright spot on the image sensor 24, as shown on figure 4 by reference sign 104. However, as it will be clear below, this bright spot may or may not be detected by the FPA depending on its operating modes.

The image sensor 24 can be set to register incoming light according to different operating modes, each with different its framerates and integration times. More specifically, the image sensor 24 can be set to a calibration mode, an acquisition mode and a link mode. The calibration mode has the lowest frame rate and the highest integration time. The acquisition mode has a higher framerate and a lower integration time than the calibration mode. Finally, the link mode has the highest framerate and the lowest integration time.

The resolution of the image sensor 24 can also be modified during use to increase or decrease its framerate and integration time. More specifically, the image sensor 24 can be operated in a full-frame state having a predetermined maximum framerate, or in a windowed state having a lower resolution and a higher maximum framerate than the full-frame state. The windowed state essentially limits sampling to a predetermined window, i.e. a smaller portion of the image sensor 24, to increase its framerate. Smaller windows thus lead to higher framerates and lower integration times.

The image sensor 24 is only able to detect a bright spot if its total signal, i.e. product of the integration time of the image sensor 24 and light power of the bright spot, exceeds a certain value. Hence, for each value of integration time, there is a minimum power required for the bright spot to be registered by the image sensor 24. Lower integration times require higher minimum power required for registration of bright spots by the image sensor 24 and vice versa. These minimum power required for registration of bright spots by the image sensor 24 are represented on figure 4 for its calibration mode (represented by threshold T1), its acquisition mode (represented by threshold T2), and its link mode (represented by threshold T3).

The various operations/functions are controlled by control unit 15 that is operationally connected to the CPA mirrors, FSM 18, optical emitter 26 and image sensor 24. The control unit 15 typically comprises a processor with memory and is configured to perform the disclosed functions and operating modes by means of program instructions (software) and/or hardware

Figure 2 shows a timeline of a method for operating the assembly of figure 1. In an initial step at t0, the optical emitter 26 is turned on to emit laser light 27. As previously mentioned, the emitted laser beam 27 is split into outgoing branch 27.1 and calibration branch 27.2, the latter of which forms a bright spot on the image sensor 24. The assembly 10 subsequently enters a calibration phase P1. During this phase, the image sensor 24 is operated according to its calibration mode in its full frame state. The image sensor 24 thus has a relatively low frame rate with a relatively high integration time, which leads to relatively low first minimum power required for registration T1. The calibration branch 27.2 has a power W1 which is greater than this first minimum power required for registration T1. The bright spot formed by the calibration branch 27.2 is thus detected by the image sensor 24, which registers its location/coordinates and referred to as calibration reference.

Following the calibration phase P1, once the satellite is in an appropriate position, the assembly 10 enters a beacon acquisition phase P2. During this phase, the image sensor 24 is operated according to its acquisition mode in its full frame state. The image sensor 24 thus has a higher frame rate with a lower integration time than during the calibration mode, which leads to second minimum power required for registration T2 (higher than T1). The power W1 of the calibration branch is lower than this second minimum power required for registration T2. The bright spot formed by the calibration branch 27.2 is thus not registered by the image sensor 24. Meanwhile, the beacon light emitted by the ground station 12 reaches the assembly with a power W2, which is lower than a maximum power W3. This maximum power W3 is obtainable only when the spacecraft is pointing towards the ground station accurately, the ground station detects it and corrects its pointing. Geometry and atmosphere also influence power.

Hence, during the acquisition phase P2, the beacon light power is typically W2, as well as during phase P3. So, W3 is normally obtained only after the P3 phase (in P4).

Advantageously, the framerate/integration time of the image sensor 24 in the acquisition mode is set such that the beacon light is detectable whilst the calibration branch 27.2 is not, i.e. W1<T2<W2. As previously mentioned, the NDF 28 is advantageously located between the beam splitter 20 and the corner cube 30 to reduce the power of the calibration branch 27.2 without reducing the power of the beacon light 13 or the outgoing branch 27.1, thereby ensuring that W1<W2, or say W1 is negligible.

Following the beacon acquisition phase P2, a coarse tracking phase P3 is performed. The CPA mirrors are actuated to reflect the beacon light propagating therethrough, such that the bright spot of the beacon light is approximatively centered on the calibration reference (registered coordinates of the bright spot of the calibration branch obtained during the calibration phase).

Following the coarse tracking phase, a fine tracking phase P4 is performed. The FSM mirror 18 is actuated to center the bright spot of the beacon light on a pointing target, which corresponds to the sum of the coordinates of the calibration reference (bright spot of the calibration branch obtained during the calibration phase) and of a vector corresponding to a point-ahead angle correction.

During fine tracking, the image sensor 24 is operated in its link mode and windowed state to achieve high frame rates (e.g. of the order of a few kHz). The FSM 18 is then operated at high frequencies with a high disturbance rejection bandwidth (e.g. approximately 1 order of magnitude (or more) below the frame rate of the image sensor 24), thereby enabling cancelation of high-frequency mechanical noise and other perturbations. Centering of the bright spot of the beacon light may also be partially offloaded to the CPA 14 to ensure that the FSM 18 does not exceed its range of motion, i.e. the CPA mirrors are actuated to during fine tracking to avoid that the FSM operates at extreme/limit angles.

Shortly after the beginning of the tracking phase P4, i.e. when the pointing error is below a predetermined maximum pointing error, the optical emitter 26 is operated to transfer data by modulating the emitted laser, thereby establishing a communication link (as represented by tL on figure 2). This communication link is maintained until all the required data has been passed down to the ground station 12, after which the optical emitter 26 is turned-off (as represented by tF on figure 2).

Figure 3 represents the different screen-space coordinates relative to the image sensor. More specifically, point 100 represents the center of the image sensor. Point 104 corresponds to the position of the calibration reference (registered bright spot of the calibration beam - only registered during the calibration phase), and vector 102 its offset relative to the center of the image sensor. Vector 106 corresponds to the point-ahead angle correction, and will vary during a pass. The pointing target 108 is computed from the sum of the position of the bright spot of the calibration beam 104 and of the point-ahead angle correction 106. The FSM 18 is operated to center the bright spot 112 of the incident/received beacon light to the pointing target 108 by, e.g. ensuring that the measured pointing error 110 is lower than the predetermined maximum pointing error 114.

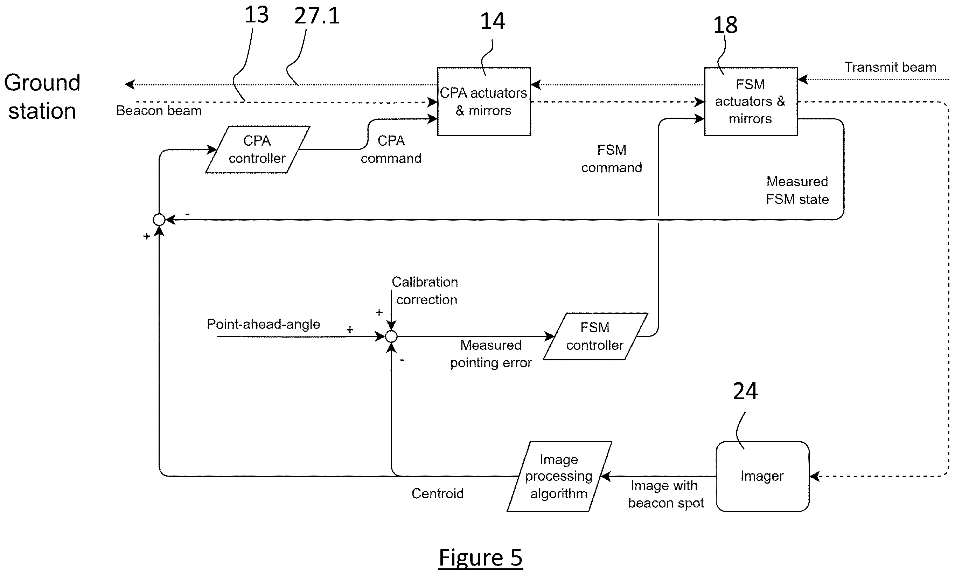

Fig. 5 shows an exemplary functional control loop for operating the assembly according to the invention. Reference signs from previous figures are reproduced in Fig.5 for corresponding components. The controllers and functions shown in Fig.5 are typically implemented by control unit 15. The ground station 12 emits a beacon beam/light which is reflected by the CPA mirrors. The beacon light is then reflected by the FSM 18 before reaching the imager 24, forming a bright spot thereon. The imager 24 processes said bright spot, registering its coordinates and passing them to an image processing algorithm. The image processing algorithm is set to determine a centroid, i.e. the center/position of the bright spot. The centroid is compared to the pointing target (i.e. the sum of the position of the bright spot of the calibration beam and of the point-ahead angle correction 108) to obtain the measured pointing error. The FSM controller sends instructions to the FSM actuators to rotate the FSM and ensure that this measured pointing error is lower than a predetermined maximum pointing error.

The centroid and the current state of the FSM are also passed to the CPA controller, which then sends a command to CPA actuators to rotate the CPA mirrors. More specifically, the CPA is operated to cancel low-frequency vibrations (and Movements/state variations/orientation changes) of the FSM. In other words, tracking of the target is partially offloaded from the FSM to the CPA. By passing the FSM state to the CPA and operating the latter to cancel low-frequency vibrations/perturbations (such as e.g. vibrations, movement and/or orientation changes), it is possible to ensure that the FSM does not get saturated, i.e. does not reach its maximum movement range.

Figure 5 further shows the optical path of the transmit beam. The transmit beam is reflected by the FSM mirrors, and is subsequently reflected by the CPA mirrors towards the ground station, accounting for the pointing ahead correction. Hence both the incoming beacon beam and the transmit beam are reflected by the FSM and the CPA mirrors. In particular, the outgoing branch and the beacon beam share a similar optical path within the terminal (up to the beam splitter 20). Hence, by centering the bright spot of the beacon beam on the pointing target, it is possible to ensure that the optical path of light from the beacon to the assembly substantially coincides with the instantaneous orientation of the optical axis, i.e. the optical path of the emitted branch.

## Claims

1. Assembly for optical communication, in particular space communication, through a telescope, the assembly comprising an image sensor (24) with an array of pixels, an optical emitter (26) configured to emit an emitted light (27) to transfer information, a beam splitter (20) and a beam director (18);
wherein the beam director (18) is arranged to receive incoming light (13) from a target (12) transmitted through the telescope, and redirect said incoming light (13) towards the beam splitter (20);
wherein the beam splitter (20) is arranged to reflect or transmit incoming light (13) redirected by the beam director (18) towards the image sensor (24), such that the image sensor (24) at least partially receives the incoming light (13);
wherein the beam splitter is arranged to split the emitted light into a calibration branch (27.2) and an outgoing branch (27.1), such that light of the calibration branch (27.2) is received by the image sensor (24), and light of the outgoing branch (27.1) is redirected by the beam director (18) towards the telescope;
wherein, in use, data from the image sensor (24) is processed by a control unit (15) and used to control the beam director (18) to track the target (12) and cancel high-frequency noise,
**characterized in that** the assembly further comprises an optical attenuator (28) arranged on an optical path of the calibration branch (27.2) to reduce its intensity;
wherein the image sensor (24) is operable in a calibration mode or in a link mode by modifying an integration time parameter of the image sensor (24);
wherein the image sensor (24) and the optical attenuator (28) are configured such that the calibration branch of the emitted light has a power which is higher than a minimum power for registration for the image sensor (24) when the latter is in calibration mode; and
wherein the image sensor (24) and the optical attenuator (28) are configured such that the calibration branch of the emitted light has a power which is lower than a minimum power for registration for the image sensor (24) when the latter is in link mode.

2. Assembly according to the previous claim, further comprising reflective means (30) configured to reflect light of the calibration branch back towards the beam splitter; and
wherein the optical attenuator (28) is arranged between the beam splitter (20) and the reflective means (30), such that the optical attenuator is neither on an optical path of the incoming light from the telescope nor on an optical path the outgoing branch.

3. Assembly according to any of the preceding claims, wherein the image sensor is further operable in an acquisition mode by modifying an integration time parameter of the image sensor;
wherein the image sensor and the optical attenuator are configured such that the calibration branch of the emitted light has a power which is lower than a minimum power for registration for the image sensor when the latter is in acquisition mode.

4. Assembly according to any of the preceding claims, wherein the image sensor is operable in a first resolution state or in a second resolution state;
whereby the second resolution state has a lower resolution and a higher framerate than the first resolution state;
wherein in calibration mode, the image sensor is in its first resolution state; and
wherein in link mode, the image sensor is in its second resolution state.

5. Assembly according to any of the preceding claims, further comprising a coarse pointing assembly (14).

6. Assembly according to any of the preceding claims, wherein the beam director (18) is a fast-steering mirror (18) that reflects the incoming light (13) towards the beam splitter (20).

7. Method for operating the assembly according to any of the preceding claims, comprising the steps of:
- measuring a position of a bright spot of the calibration branch on the image sensor, thereby obtaining a calibration correction;
- acquiring incoming light corresponding to a beacon signal from a target, and monitoring a position of a bright spot of the beacon signal on the image sensor;
- tracking the beacon signal;
wherein tracking of the beacon signal is achieved by operating the beam director (18) to center the bright spot of the beacon signal on a pointing target, thereby cancelling high-frequency noise and tracking the beacon signal from the target; and
wherein said pointing target is determined based on the calibration correction.

8. Method according to any of the preceding method claim, wherein the pointing target is computed based on a pointing ahead correction and the calibration correction.

9. Method according to any of the preceding method claim, wherein operating the beam director (18) to center the bright spot of the beacon signal on a pointing target is performed by ensuring that a measured pointing error is lower than a predetermined maximum pointing error.

10. Method according to any of the preceding method claim, wherein the step of calibration is performed when the image sensor is set to the calibration mode with a registration threshold T1, and wherein the step of tracking is performed when the image sensor is set to the link mode with a registration threshold T3, where T1 <T3.

11. Method according to any of the preceding method claim when depending on claim 4, wherein the step of calibrating the image sensor and/or the step of acquiring a beacon signal is performed when the image sensor is set to the first resolution state, and wherein the step of tracking is performed when the image sensor is set to the second resolution state.

12. Method according to any of the preceding method claim when depending on claim 5, wherein the step of acquiring a beacon signal from a target is performed by operating the coarse pointing assembly (14) to point towards the target.

13. Method according to the preceding claim, wherein tracking of the beacon signal is further achieved by operating the coarse pointing assembly (14) to cancel low-frequency vibrations of the beam director (18), thereby partially offloading tracking from the beam director (18) to the coarse pointing assembly (14).

14. Method according to any of the preceding method claim, wherein during the step of tracking, the emitted light from the optical emitter is modulated to transfer data to the ground station.

15. Satellite terminal comprising the assembly according to any of claims 1 to 5 claims, and further comprising an interface for coupling with a satellite;
preferably wherein the interface comprises a passive dampening system.
